# EUROPEAN PATENT SPECIFICATION

(11) **EP 3 279 038 B1**
(45) Date of publication and mention of the grant of the patent: **27.02.2019**
(21) Application number: 17183971.5
(22) Date of filing: 31.07.2017
(51) Int. Cl.: B60R 13/10

(54) **SUPPORTING STRUCTURE FOR VEHICLE LICENSE PLATES**
HALTESTRUKTUR FÜR FAHRZEUGNUMMERNSCHILD
STRUCTURE DE SUPPORT POUR PLAQUES D'IMMATRICULATION DE VÉHICULES

(30) Priority: 02.08.2016 IT 201600080932
(43) Date of publication of application: 07.02.2018
(73) Proprietor: MWT S.r.l., 30030 Pianiga, Frazione Mellaredo (VE) (IT)
(72) Inventor: BARBATO, Paolo, 35020 Ponte San Nicolo' Pd (IT)
(74) Representative: Modiano, Micaela Nadia

(56) References cited:
- DE-A1- 2 211 292
- DE-U1- 29 706 806
- FR-A3- 2 946 105
- GB-A- 2 469 474
- US-A- 2 501 474

## Description

The present invention relates to a supporting structure for vehicle license plates.

As is known, license plates of road vehicles can be fixed to the body of the vehicle either directly or by way of suitable supporting structures which are constituted, usually, by a plate-like body made of plastic material.

Typically, slots are defined in the plate-like body, into which self-tapping anchoring screws can be inserted, which are arranged along the slots on the basis of the type of model of the vehicle and which make it possible, once screwed to the body of the vehicle, to fix the plate-like body to the vehicle body. Document US 2501474 A1 discloses a supporting structure for vehicle plates.

The drawback of supporting structures thus provided consists in that, even after having screwed the anchoring screws to the body, it is possible, by applying even a modest force, to displace the plate-like body along a direction parallel to the slots and to its plane of arrangement, since the plate-like body is capable of sliding with respect to the fixing screws.

The aim of the present invention is to provide a solution to the above mentioned problems of the known art, by devising a supporting structure for vehicle license plates that can be positively fixed to vehicle, without there being possible unwanted displacements thereof.

Within this aim, an object of the present invention is to provide a supporting structure for vehicle license plates that is capable of offering the widest guarantees of reliability and safety in use.

Another object of the present invention is to provide a supporting structure for vehicle license plates that is simple to provide in terms of construction and which is competitive from a purely economic viewpoint as well.

This aim and these and other objects which will become better apparent hereinafter are achieved by a supporting structure for vehicle license plates, according to the invention, according to claim 1.

Further characteristics and advantages of the invention will become better apparent from the description of a preferred, but not exclusive, embodiment of the supporting structure for vehicle license plates, according to the invention, which is illustrated, by way of non-limiting example, in the accompanying drawings wherein:

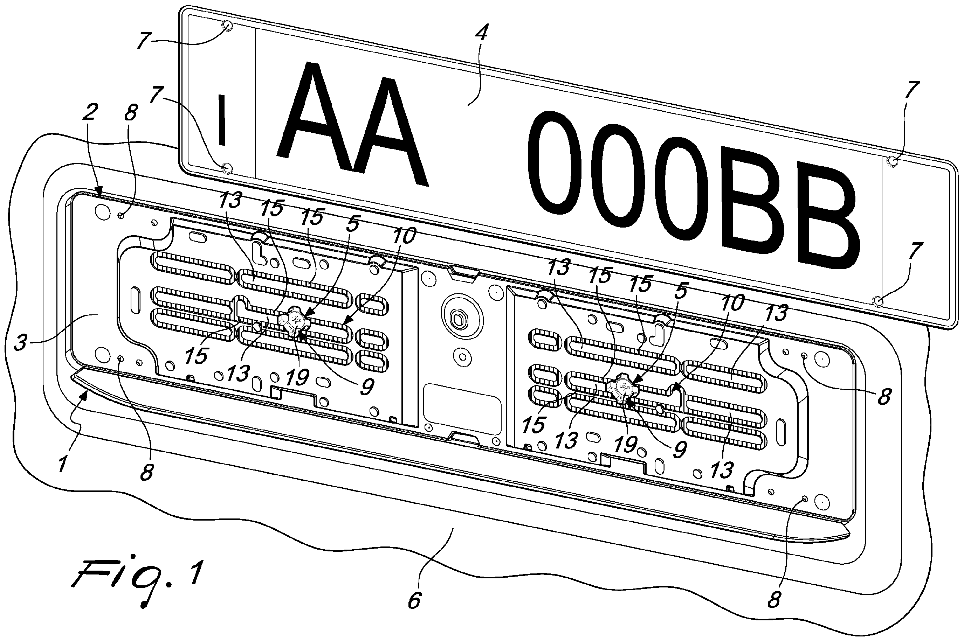

Figure 1 is an exploded perspective view of the supporting structure according to the invention and of a license plate that can be coupled with it;

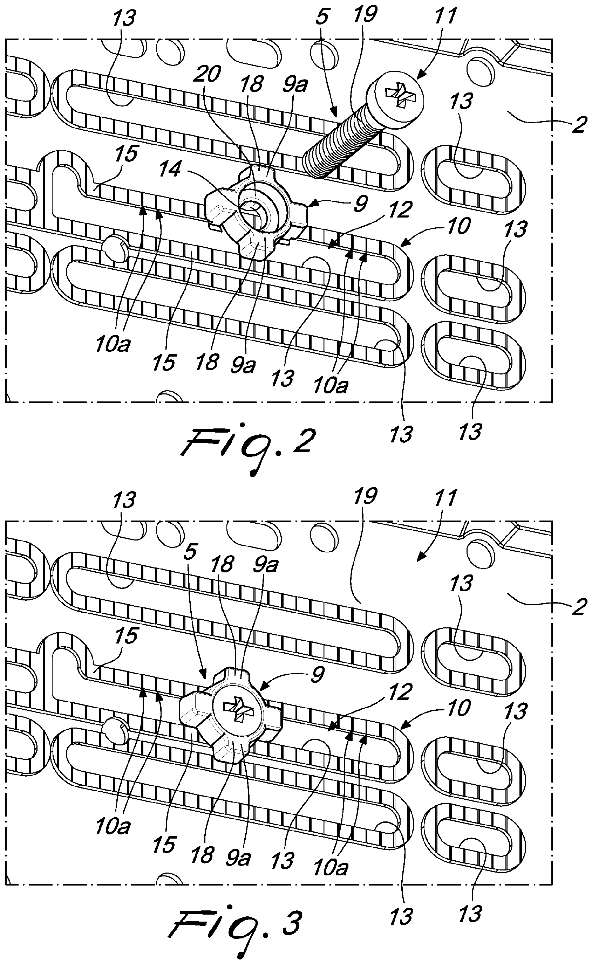

Figure 2 is an exploded perspective view of the means of fixing the supporting structure according to the invention;
Figure 3 is a perspective view of the means of fixing the supporting structure according to the invention;

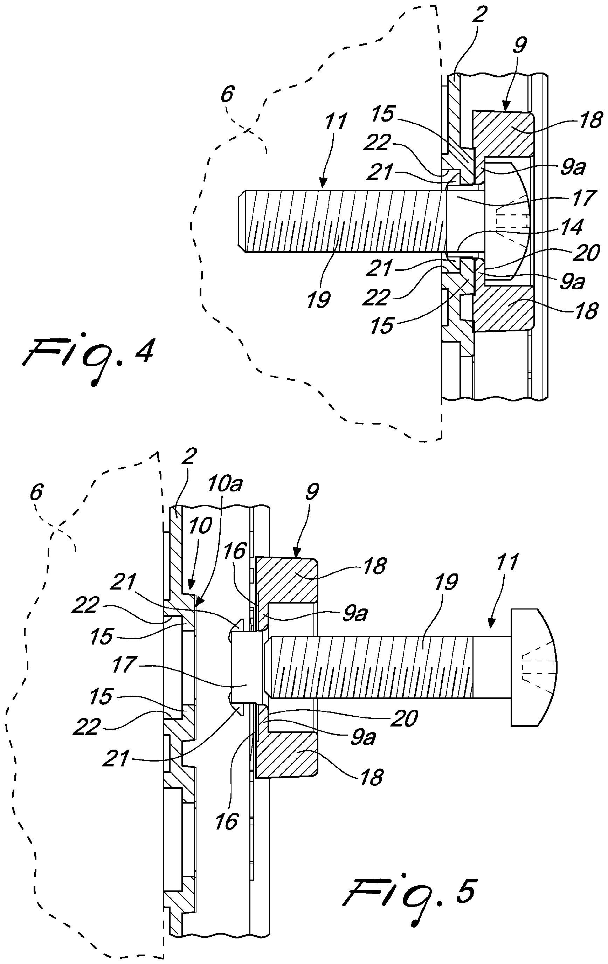

Figure 4 is a transverse cross-sectional view of a detail of the means of fixing the supporting structure according to the invention;
Figure 5 is an exploded transverse cross-sectional view of the fixing means of Figure 4;

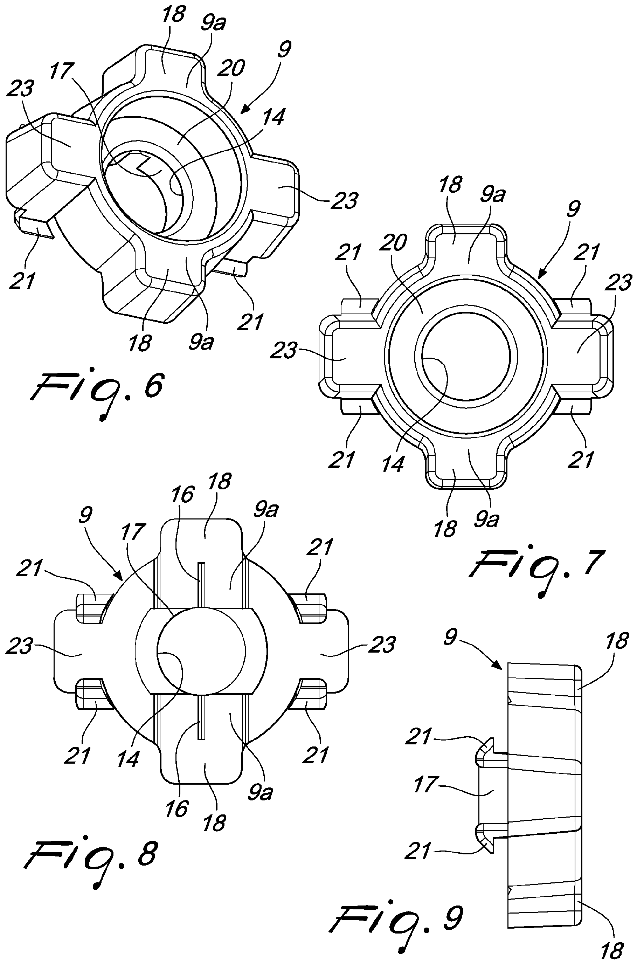

Figure 6 is a perspective view of a first element of the means of fixing the supporting structure according to the invention;
Figure 7 is a plan view from above of the first element of Figure 6;
Figure 8 is a plan view from below of the first element of Figure 6;
Figure 9 is a side view of the first element of Figure 6.

With reference to the figures, the supporting structure for vehicle license plates, according to the invention, which is generally designated with the reference numeral 1, comprises a plate-like body 2 that defines at least one coupling region 3 for a license plate 4 and which is provided with means 5 that enable the stable fixing thereof to a vehicle 6.

As usual, the plate-like body 2 is, conveniently, facing, with a face thereof, toward the vehicle 6 and the license plate 4 can, for example, be coupled to the plate-like body 2, on its face facing away from the vehicle, by way of suitable fixing buttons 7 that are adapted to engage corresponding holes 8 provided in the plate-like body 2.

According to the invention, the fixing means 5 comprise at least one first element 9, which can move along at least one adjustment trajectory with respect to the plate-like body 2, and at least one second element 10, which is associated with the plate-like body 2 and has a plurality of engagement regions 10a that are mutually spaced apart along the adjustment trajectory of the first element 9.

The fixing means 5 comprise, further, at least one locking element 11 which can engage with the first element 9 and with the vehicle 6.

In particular, the first element 9 has at least one retention portion 9a which is able to engage at least one of the engagement regions 10a with consequent locking of the displacement of the first element 9 with respect to the plate-like body 2, following the engagement of the locking element 11 with the first element 9 and with the vehicle 6.

Preferably, the first element 9 is mounted so that it can slide along a guide 12 that is defined on the plate-like body 2 and which extends along the aforementioned adjustment trajectory.

Conveniently, the first element 9 can, further, be displaced, at least with its engagement portion 9a, toward or away from the engagement regions 10a of the second element 10, in order to allow the displacement of the first element 9 with respect to the plate-like body 2 along the guide 12, with the possibility of engaging, in sequence, the engagement regions 10a by the engagement portion 9a of the first element 9, upon the displacement of that first element along the guide 12.

In particular, the locking element 11 is capable of engaging the first element 9 and the vehicle 6, upon fixing the plate-like body 2 to the vehicle 6, so as to prevent the displacement of the engagement portion 9a away from the engagement regions 10a of the second element 10, thus blocking the possibility of relative displacement between the first element 9 and the second element 10.

In more detail, the guide 12 is provided, conveniently, by at least one slot 13, which is defined in the plate-like body 2 and which extends substantially along the adjustment trajectory.

Advantageously, the first element 9 is provided with, at the slot 13, in which it is fitted so that it can slide, a passage 14 that can be passed through by the locking element 11 in order to allow its engagement with the vehicle 6.

It should be noted that, in the plate-like body 2, there can be multiple slots 13 which can be selectively used to fix the plate-like body 2 by way of a corresponding first element 9, depending on the model of vehicle 6 to which the plate-like body 2 needs to be fixed.

It should further be noted that, in order to fix the plate-like body 2, in each instance the installer can use two of the various slots 13 present, arranged on mutually opposite sides with respect to a central plane of symmetry of the plate-like body 2, perpendicular to its plane of arrangement.

Advantageously, the second element 10 comprises at least one rack 15, integral with the plate-like body 2, which is conveniently provided with a set of teeth, advantageously frontal, which is defined on the face of the plate-like body 2 that is directed away from the vehicle 6 and which extends substantially parallel to the slot 13.

The retention portion 9a of the first element 9 is, in turn, facing the set of teeth of the rack 15 and is provided, on its side directed toward the set of teeth, with at least one groove 16 that can engage the teeth of the set of teeth.

Preferably, for each slot 13 there is at least one pair of racks 15 which are arranged mutually opposite with respect to the corresponding slot 13. In particular, each one of the racks 15 has a respective set of teeth that extends along a corresponding longitudinal edge of the corresponding slot 13. In this case, the first element 9 will, conveniently, be provided with a retention portion 9a for each rack 15.

According to the example shown, the first element 9 is provided with an axial portion 17, conveniently substantially cylindrical, which is arranged through the slot 13 and is axially passed through by the passage 14.

Conveniently, the first element 9 is, further, provided, at the end of the axial portion 17 directed away from the vehicle 6, with at least one lateral expansion 18, which extends radially from the axial portion and which makes it possible to define a corresponding retention portion 9a.

More preferably, the first element 9 has two lateral expansions 18, in each of which a respective retention portion 9a is defined which is intended to engage a corresponding rack 15.

Conveniently, the locking element 11 comprises a screw 19 intended to rest with its head against an abutment region 20 defined on the side of the first element 9 that is directed away from the vehicle 6 and arranged about the passage 14.

With its shank the screw 19 further passes through the passage 14, so as to be able to engage with the vehicle 6, so as to also provide the connection of the plate-like body 2 to the vehicle 6.

Optionally, the screw 19 can be self-tapping, so that it can be screwed directly to the body of the vehicle 6, or it can be simply screwed into suitable inserts made of plastic material, which are provided on the body of the vehicle and are already provided with a corresponding female thread for receiving the screw 19.

Conveniently, in order to prevent its axial extraction from the slot 13, the first element 9 is provided, at the end of the axial portion 17 directed toward the vehicle 6, with at least one abutment tooth 21, protruding laterally with respect to the axial portion 17, so as to be able to face toward the face of the plate-like body 2 that is intended to be directed toward the vehicle 6, engaging, advantageously, in a corresponding sliding groove 22, which extends parallel to the slot 13 and which is defined on the face of the plate-like body 2 intended to be directed toward the vehicle 6.

Preferably, there are at least two abutment teeth 21, arranged on mutually opposite sides, with respect to the axial portion 17, and adapted to engage corresponding sliding slots 22 defined on the mutually opposite longitudinal sides of the slot 13.

More preferably, there are two pairs of abutment teeth 21 which are mutually spaced apart along the direction of extension of the first element 9 parallel to the slot 13 and which make it possible to immobilize the rotation of the first element 9 about the axis of its axial portion 17.

For example, as illustrated, the two pairs of sliding teeth 21 are arranged at respective longitudinal expansions 23, which are defined on the first element 9 and extend along a direction that is substantially parallel to the slot 13.

Conveniently, the abutment teeth 21 have, on their side intended to be directed toward the vehicle 6, an inclined guiding face in order to allow the snap coupling of the first element 9 with the slot 13.

It should be noted that the distance between the abutment teeth 21 and the retention portions 9a of the first element 9 is, conveniently, such as to allow, when the locking element 11 is not engaged with the vehicle 6 and with the first element 9, the displacement of the first element 9 along a direction parallel to the axis of the axial portion 17, so as to allow the distancing of its retention portions 9a from the engagement regions 10a of the second element 10 and the consequent possibility of displacement of the first element 9 along the slot 13.

As in the example shown, conveniently, the first element 9 defines, further, on its side directed away from the vehicle 6 and therefore directed toward the license plate 4, an accommodation recess 24 for the head of the screw 19, so that once the screw 19 has been made to engage with the first element 9 and with the vehicle 6, the head of the screw 19 is substantially flush with the face of the first element 9 directed toward the license plate 4, in order to prevent it from obstructing the correct positioning of the license plate.

Use of the supporting structure of the invention is the following.

Depending on the model or on the maker of the vehicle 6, a respective first element 9 is coupled in the slot or slots 13 provided in the plate-like body 2.

In order to do this, from the face of the plate-like body 2 intended to be directed toward the license plate 4, the axial portion 17 of the first element 9 is introduced into the corresponding slot 13, forcing its abutment teeth 21 to pass through the slot 13, so that the abutment teeth 21 can settle by snap-action in the sliding slots 22.

At this point, the first element 9 can be made to slide along the respective slot 13 so as to be able to adjust its position, since the possibility to displace the retention portions 9a toward or away from the engagement regions 10a of the second element 10 and, more specifically, toward or from the teeth of the sets of teeth of the racks 15, makes it possible for the retention portions 9a to engage the engagement regions 10a in sequence, basically snapping on them, while the first element is made to slide along the slot 13.

Once the first element 9 is brought to the desired position, the locking element 11 is engaged with the first element 9 and with the vehicle 6 and, in particular, the shank of the screw 19 is inserted through the passage 14 so that it can reach the vehicle 6 and can be screwed into it.

Once the head of the screw 19 is tightened against the abutment region 20 of the first element 9, the retention portions 9a of the first element are pushed against the set of teeth of the racks 15, thus engaging the grooves 16 of the retention portions 9a with the teeth of the sets of teeth of the racks 15 with consequent blocking of the possibility of relative translation between the first element 9 and the second element 10.

At this point, the plate-like body 2 is connected to the vehicle 6, for engaging the screws 19 with the vehicle, and the possibility that the plate-like body 2 can be displaced with respect to the vehicle 6 by sliding with respect to the screws 19 is impeded by the locking in place applied by the engagement of the first element 9 with the second element 10.

The installer can therefore proceed to connect the license plate 4 to the plate-like body 2 by way of the fixing buttons 7.

In practice it has been found that the invention is capable of fully achieving the set aim and objects.

All the characteristics of the invention, indicated above as advantageous, convenient or similar, may also be missing or be substituted by equivalent characteristics.

The invention, thus conceived, is susceptible of numerous modifications and variations, all of which are within the scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A supporting structure for vehicle license plates, which comprises a plate-like body (2) that defines at least one coupling region (3) for a license plate (4) and is provided with means (5) for fixing to a vehicle (6), wherein said fixing means (5) comprises at least one first element (9), which can move along at least one adjustment trajectory with respect to said plate-like body (2), **characterized in that** said fixing means further comprises at least one second element (10),
which is associated with said plate-like body (2) and has a plurality of engagement regions (10a) that are mutually spaced apart along said adjustment trajectory, there being at least one locking element (11) which can engage with said first element (9) and with said vehicle (6), said first element (9) having at least one retention portion (9a) which is adapted to engage at least one of said engagement regions (10a) with consequent locking of the displacement of said first element (9) with respect to said plate-like body (2), following the engagement of said locking element (11) with said first element (9) and with said vehicle (6).

2. The supporting structure according to claim 1, **characterized in that** said first element (9) is mounted so that it can slide along a guide (12) that is defined on said plate-like body (2) and extends along said adjustment trajectory.

3. The supporting structure according to claim 1, **characterized in that** said guide (12) comprises at least one slot (13) that is defined in said plate-like body (2) and extends substantially along said adjustment trajectory.

4. The supporting structure according to one or more of the preceding claims, **characterized in that** in said first element (9) there is, at said at least one slot (13), a passage (14) that can be passed through by said locking element (11) in order to allow its engagement with said vehicle (6).

5. The supporting structure according to one or more of the preceding claims, **characterized in that** said second element (10) comprises at least one rack (15) which is integral with said plate-like body (2).

6. The supporting structure according to one or more of the preceding claims, **characterized in that** said at least one rack (15) has a set of teeth, which is defined on the face of said plate-like body (2) that is directed away from said vehicle (6) and extends substantially parallel to said at least one slot (13), said retention portion (9a) of said first element (9) facing said set of teeth and being provided, on its side directed toward said set of teeth, with at least one groove (16) that can engage with the teeth of said set of teeth.

7. The supporting structure according to one or more of the preceding claims, **characterized in that** said first element (9) has an axial portion (17), which is arranged through said slot (13) and is axially passed through by said passage (14), and is provided, at the end of said axial portion (17) that is directed away from said vehicle (6), with at least one lateral expansion (18), which extends radially from said axial portion (17) and defines said at least one retention portion (9a).

8. The supporting structure according to one or more of the preceding claims, **characterized in that** said locking element (11) comprises a screw (19) which rests, with its head, against an abutment region (20) defined on the side of said first element (9) that is directed away from said vehicle (6) and arranged around said passage (14), said screw (19) passing with its shank through said passage (14) and engaging with said vehicle (6).

9. The supporting structure according to one or more of the preceding claims, **characterized in that** said first element (9) has, at the end of said axial portion (17) that is directed toward said vehicle (6), at least one abutment tooth (21), which protrudes laterally with respect to said axial portion (17) and engages in a sliding groove (22) that extends parallel to said slot (13) and which is defined on the face of said plate-like body (2) that is intended to be directed toward said vehicle (6).

10. The supporting structure according to one or more of the preceding claims, **characterized in that** said first element (9) forms an accommodation recess (24) for the head of said screw (19).

## Patentansprüche

1. Eine Haltestruktur für Fahrzeugnummernschilder, die einen plattenähnlichen Körper (2) umfasst, welcher mindestens einen Kopplungsbereich (3) für ein Nummernschild (4) bestimmt und mit Mitteln (5) zur Befestigung an einem Fahrzeug (6) ausgestattet ist, wobei das Befestigungsmittel (5) mindestens ein erstes Element (9) umfasst, welches sich entlang mindestens einer Verstelltrajektorie mit Bezug auf den plattenähnlichen Körper (2) bewegen kann; **dadurch gekennzeichnet, dass** das Befestigungsmittel weiter mindestens ein zweites Element (10) umfasst, das mit dem plattenähnlichen Körper (2) verbunden ist und eine Vielzahl von Eingriffsbereichen (10a) hat, die entlang der Verstelltrajektorie voneinander beabstandet sind; wobei es mindestens ein Befestigungselement (11) gibt, das mit dem ersten Element (9) und mit dem Fahrzeug (6) in Eingriff stehen kann, wobei das erste Element (9) mindestens einen Halteabschnitt (9a) hat, der ausgelegt ist, um mit mindestens einem der Eingriffsbereiche (10a) in Eingriff zu stehen, mit daraus folgender Blockade der Verschiebung des ersten Elements (9) im Verhältnis zu dem plattenähnlichen Körper (2) nach Eingriff des Befestigungselements (11) in das erste Element (9) und in das Fahrzeug (6).

2. Die Haltestruktur gemäß Anspruch 1, **dadurch gekennzeichnet, dass** das erste Element (9) entlang einer Führung (12) verschiebbar montiert ist, die an dem plattenähnlichen Körper (2) bestimmt ist und sich entlang der Verstelltrajektorie erstreckt.

3. Die Haltestruktur gemäß Anspruch 1, **dadurch gekennzeichnet, dass** die Führung (12) mindestens einen Schlitz (13) umfasst, der in dem plattenähnlichen Körper (2) bestimmt ist und sich im Wesentlichen entlang der Verstelltrajektorie erstreckt.

4. Die Haltestruktur gemäß einem oder mehreren der obigen Ansprüche, **dadurch gekennzeichnet, dass** sich in dem ersten Element (9), an dem mindestens einen Schlitz (13), ein Kanal (14) befindet, der von dem Befestigungselement (11) durchquert werden kann, um seinen Eingriff in das Fahrzeug (6) zu ermöglichen.

5. Die Haltestruktur gemäß einem oder mehreren der obigen Ansprüche, **dadurch gekennzeichnet, dass** das zweite Element (10) mindestens eine Zahnstange (15) umfasst, die integral mit dem plattenähnlichen Körper (2) ist.

6. Die Haltestruktur gemäß einem oder mehreren der obigen Ansprüche, **dadurch gekennzeichnet, dass** die mindestens eine Zahnstange (15) einen Satz von Zähnen hat, der auf der Seite des plattenähnlichen Körpers (2) bestimmt ist, welche von dem Fahrzeug (6) abgewandt ist, und sich im Wesentlichen parallel zu dem mindestens einen Schlitz (13) erstreckt, wobei der Halteabschnitt (9a) des ersten Elements (9) dem Satz von Zähnen zugewandt und auf der Seite, die zu dem Satz von Zähnen hin gerichtet ist, mit mindestens einer Nut (16) versehen ist, die mit den Zähnen des Satzes von Zähnen in Eingriff stehen kann.

7. Die Haltestruktur gemäß einem oder mehreren der obigen Ansprüche, **dadurch gekennzeichnet, dass** das erste Element (9) einen axialen Abschnitt (17) hat, der durch den Schlitz (13) verläuft und axial von dem Kanal (14) durchquert wird und an dem Ende des axialen Abschnitts (17), das von dem Fahrzeug (6) abgewandt ist, mit mindestens einer lateralen Erweiterung (18) versehen ist, die sich radial von dem axialen Abschnitt (17) erstreckt und den mindestens einen Halteabschnitt (9a) bestimmt.

8. Die Haltestruktur gemäß einem oder mehreren der obigen Ansprüche, **dadurch gekennzeichnet, dass** das Befestigungselement (11) eine Schraube (19) umfasst, die mit ihrem Kopf an einem Widerlagerbereich (20) anliegt, der auf der Seite des ersten Elements (9) bestimmt ist, welche von dem Fahrzeug (6) abgewandt und um den Kanal (14) herum angeordnet ist, wobei die Schraube (19) mit ihrem Schaft den Kanal (14) durchdringt und mit dem Fahrzeug (6) in Eingriff steht.

9. Die Haltestruktur gemäß einem oder mehreren der obigen Ansprüche, **dadurch gekennzeichnet, dass** das erste Element (9) an dem Ende des axialen Abschnitts (17), das dem Fahrzeug (6) zugewandt ist, mindestens einen Widerlagerzahn (21) hat, der seitlich von dem axialen Abschnitt (17) herausragt und in eine Schiebenut (22) eingreift, die sich parallel zu dem Schlitz (13) erstreckt und auf der Seite des plattenähnlichen Körpers (2) geformt ist, die dem Fahrzeug (6) zugewandt sein soll.

10. Die Haltestruktur gemäß einem oder mehreren der obigen Ansprüche, **dadurch gekennzeichnet, dass** das erste Element (9) eine Aufnahmevertiefung (24) für den Kopf der Schraube (19) bildet.

## Revendications

1. Structure de support pour des plaques d'immatriculation de véhicules, laquelle structure comportant un corps analogue à une plaque (2) qui définit au moins une zone de couplage (3) pour une plaque d'immatriculation (4) et est pourvu de moyens (5) pour une fixation sur un véhicule (6), dans laquelle lesdits moyens de fixation (5) comportent au moins un premier élément (9), qui peut se déplacer le long d'au moins une trajectoire de réglage par rapport audit corps analogue à une plaque (2), **caractérisée en ce que** lesdits moyens de fixation comportent en outre au moins un second élément (10), qui est associé audit corps analogue à une plaque (2) et a une pluralité de zones de prise (10a) qui sont mutuellement espacées le long de ladite trajectoire de réglage, au moins un élément de blocage (11) pouvant venir en prise avec ledit premier élément (9) et avec ledit véhicule (6), ledit premier élément (9) ayant au moins une partie de retenue (9a) qui est adaptée pour venir en prise avec au moins une desdites zones de prise (10a) avec un blocage conséquent du déplacement dudit premier élément (9) par rapport audit corps analogue à une plaque (2), après la mise en prise dudit élément de blocage (11) avec ledit premier élément (9) et avec ledit véhicule (6) .

2. Structure de support selon la revendication 1, **caractérisée en ce que** ledit premier élément (9) est monté de sorte qu'il peut glisser le long d'un guide (12) qui est défini sur ledit corps analogue à une plaque (2) et s'étend le long de ladite trajectoire de réglage.

3. Structure de support selon la revendication 1, **caractérisée en ce que** ledit guide (12) comporte au moins une fente (13) qui est définie dans ledit corps analogue à une plaque (2) et s'étend sensiblement le long de ladite trajectoire de réglage.

4. Structure de support selon une ou plusieurs des revendications précédentes, **caractérisée en ce que** dans ledit premier élément (9), il existe, au niveau de ladite au moins une fente (13), un passage (14) qui peut être traversé par ledit élément de blocage (11) afin de permettre sa mise en prise avec ledit véhicule (6).

5. Structure de support selon une ou plusieurs des revendications précédentes, **caractérisée en ce que** ledit second élément (10) comporte au moins une denture (15) qui est solidaire dudit corps analogue à une plaque (2) .

6. Structure de support selon une ou plusieurs des revendications précédentes, **caractérisée en ce que** ladite au moins une denture (15) a un ensemble de dents, qui est défini sur la face dudit corps analogue à une plaque (2) qui est dirigée en s'écartant dudit véhicule (6) et s'étend de manière sensiblement parallèle à ladite au moins une fente (13), ladite partie de retenue (9a) dudit premier élément (9) faisant face audit ensemble de dents et étant pourvue, sur son côté dirigé vers ledit ensemble de dents, d'au moins une rainure (16) qui peut venir en prise avec les dents dudit ensemble de dents.

7. Structure de support selon une ou plusieurs des revendications précédentes, **caractérisée en ce que** ledit premier élément (9) a une partie axiale (17), qui est agencée à travers ladite fente (13) et est axialement traversée par ledit passage (14), et est pourvue, à l'extrémité de ladite partie axiale (17) qui est dirigée en s'écartant dudit véhicule (6), d'au moins une expansion latérale (18), qui s'étend radialement à partir de ladite partie axiale (17) et définit ladite au moins une partie de retenue (9a).

8. Structure de support selon une ou plusieurs des revendications précédentes, **caractérisée en ce que** ledit élément de blocage (11) comporte une vis (19) qui est en appui, avec sa tête, contre une zone de butée (20) définie sur le côté dudit premier élément (9) qui est dirigé en s'écartant dudit véhicule (6) et agencé autour dudit passage (14), ladite vis (19) passant avec sa tige à travers ledit passage (14) et venant en prise avec ledit véhicule (6).

9. Structure de support selon une ou plusieurs des revendications précédentes, **caractérisée en ce que** ledit premier élément (9) a, à l'extrémité de ladite partie axiale (17) qui est dirigée vers ledit véhicule (6), au moins une dent de butée (21), qui fait latéralement saillie par rapport à ladite partie axiale (17) et vient en prise dans une rainure de glissement (22) qui s'étend parallèlement à ladite fente (13) et qui est définie sur la face dudit corps analogue à une plaque (2) qui est destinée à être dirigée vers ledit véhicule (6).

10. Structure de support selon une ou plusieurs des revendications précédentes, **caractérisée en ce que** ledit premier élément (9) forme un évidement de réception (24) pour la tête de ladite vis (19).
